(19) Europäisches Patentamt
European Patent Office
Office européen des brevets

(11) EP 4 293 390 A1

(12) EUROPEAN PATENT APPLICATION
published in accordance with Art. 153(4) EPC

(43) Date of publication:
20.12.2023 Bulletin 2023/51

(21) Application number: 22762839.3

(22) Date of filing: 25.01.2022

(51) International Patent Classification (IPC):
G01S 17/86 (2020.01)          G01B 11/24 (2006.01)
G01C 3/06 (2006.01)           G01S 17/894 (2020.01)

(52) Cooperative Patent Classification (CPC):
G01B 11/24; G01C 3/06; G01S 17/86;
G01S 17/894

(86) International application number:
PCT/JP2022/002517

(87) International publication number:
WO 2022/185780 (09.09.2022 Gazette 2022/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.03.2021 JP 2021033442

(71) Applicant: Sony Group Corporation
Tokyo 108-0075 (JP)

(72) Inventors:
• SAKURAI, Yuta
  Tokyo 108-0075 (JP)
• SASAKI, Toshiyuki
  Tokyo 108-0075 (JP)
• KAMIO, Kazunori
  Tokyo 108-0075 (JP)
• KAWATA, Satoshi
  Tokyo 108-0075 (JP)

(74) Representative: D Young & Co LLP
120 Holborn
London EC1N 2DY (GB)

(54) INFORMATION PROCESSING DEVICE, INFORMATION PROCESSING METHOD, AND PROGRAM

(57) An information processing device (30) includes a signal acquisition unit (31), a passive depth estimation unit (34), and a fusion unit (35). The signal acquisition unit (31) extracts, from light reception data, active information indicating a flight time of reference light (PL) and passive information (PI) indicating two-dimensional image information of a subject (SU) obtained from ambient light (EL). The passive depth estimation unit (34) generates passive depth information (PDI) based on the passive information (PI). The fusion unit (35) fuses the passive depth information (PDI) with active depth information (ADI) generated based on the active information to generate depth information (DI) of the subject (SU).

FIG.6

**Description**

Field

The present invention relates to an information processing device, an information processing method, and a program.

Background

A three-dimensional measurement technique using a Time of Flight (ToF) method is known. In this method, reference light such as an infrared pulse is projected toward a subject, and the depth of the subject is detected based on information of the time until the reflected light is received.

Citation List

Patent Literature

Patent Literature 1: JP 2010-071976 A
Patent Literature 2: WO 2010/021090 A
Patent Literature 3: JP 2011-233983 A
Patent Literature 4: JP 2001-264033 A

Summary

Technical Problem

The above method has an issue that, in the presence of ambient light having the same wavelength as that of the reference light in the measurement environment, the ambient light produces noise to cause depth detection accuracy deterioration.
In view of this, the present disclosure proposes an information processing device, an information processing method, and a program capable of enhancing the depth detection accuracy.

Solution to Problem

According to the present disclosure, an information processing device is provided that comprises: a signal acquisition unit that extracts, from light reception data, active information indicating a flight time of reference light and passive information indicating two-dimensional image information of a subject obtained from ambient light; a passive depth estimation unit that generates passive depth information based on the passive information; and a fusion unit that fuses the passive depth information with active depth information generated based on the active information to generate depth information of the subject. According to the present disclosure, an information processing method in which an information process of the information processing device is executed by a computer, and a program for causing a compute to execute the information process of the information processing device are provided.

Brief Description of Drawings

FIG. 1 is a diagram illustrating a distance measurement technique using a ToF camera.
FIG. 2 is a diagram illustrating an example in which an ambient light source exists in an image capturing environment of a subject.
FIG. 3 is a diagram illustrating an example of light reception data obtained by a ToF camera.
FIG. 4 is a diagram illustrating an example of active information and passive information.
FIG. 5 is a diagram illustrating a data structure of LiDAR input data.
FIG. 6 is a diagram illustrating a schematic configuration of a ToF camera.
FIG. 7 is a diagram illustrating an example of active depth information correction processing performed by a filter unit.
FIG. 8 is a diagram illustrating an example of active depth information correction processing performed by the filter unit.

FIG. 9 is a diagram illustrating an example of waveform separation processing performed by a signal acquisition unit.

FIG. 10 is a diagram illustrating an example of waveform separation processing performed by the signal acquisition unit.

FIG. 11 is a diagram illustrating an example of waveform separation processing performed by the signal acquisition unit.

FIG. 12 is a diagram illustrating an example of waveform separation processing performed by the signal acquisition unit.

FIG. 13 is a view illustrating an example of a measurement term setting method.

FIG. 14 is a flowchart illustrating an example of information processing related to estimation of depth.

Description of Embodiments

Embodiments of the present disclosure will be described below in detail with reference to the drawings. In each of the following embodiments, the same parts are denoted by the same reference symbols, and a repetitive description thereof will be omitted.

Note that the description will be given in the following order.

[1. Distance measurement technique using ToF camera]
[2. LiDAR input data]
[3. Configuration of ToF camera]
[4. Active depth information correction processing using passive information]
[5. Waveform separation processing]
[6. Fusion ratio setting processing]
[7. Setting of measurement term and sampling period]
[8. Information processing method]
[9. Effects]

[1. Distance measurement technique using ToF camera]

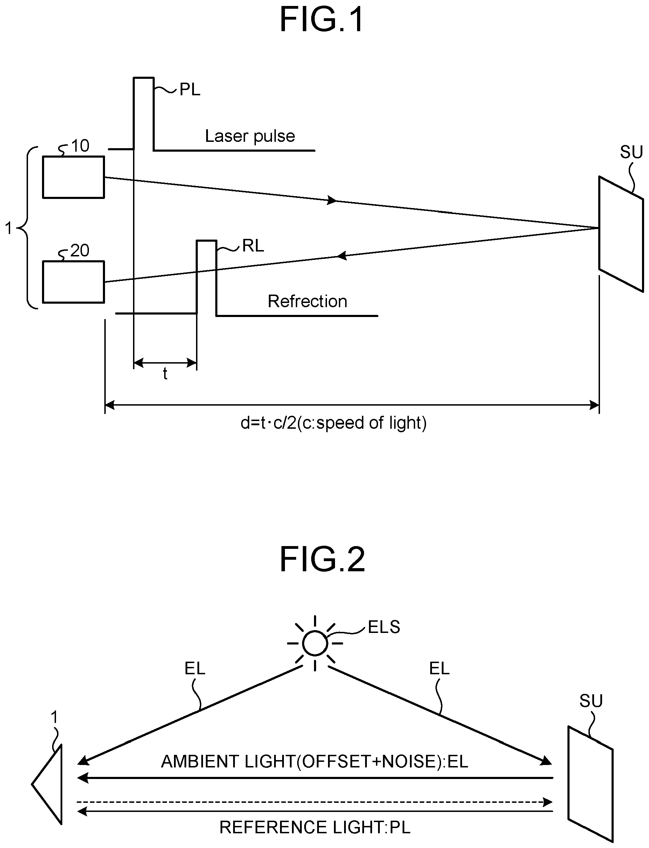

FIG. 1 is a diagram illustrating a distance measurement technique using a ToF camera 1.

The ToF camera 1 includes a light projection unit 10 and a light reception unit 20. The light projection unit 10 projects reference light PL toward a subject SU. The reference light PL is pulsed light of infrared, for example. The light reception unit 20 receives reference light PL (reflected light RL) reflected by the subject SU. The ToF camera 1 detects a depth d of the subject SU based on a time t from of a moment of projection of the reference light PL to a moment of reception of the reference light PL by the light reception unit 20 after reflection of the light on the subject SU. The depth d can be expressed as $d = t \times c/2$ using a speed of light c.

FIG. 2 is a diagram illustrating an example in which an ambient light source ELS exists in an image capturing environment of the subject SU.

When the ambient light source ELS such as the sun or the electric light exists in the image capturing environment, the ambient light EL emitted from the ambient light source ELS is incident on the light reception unit 20 in addition to the reference light PL reflected on the subject SU. When the ambient light EL having the same wavelength as the reference light PL exists in the image capturing environment, the ambient light PL produces noise to cause depth detection accuracy deterioration in some cases. Although Patent Literatures 2 to 4 eliminate the ambient light PL that produces noise, the present disclosure actively utilizes the ambient light PL to enhance the depth detection accuracy. This point will be described below.

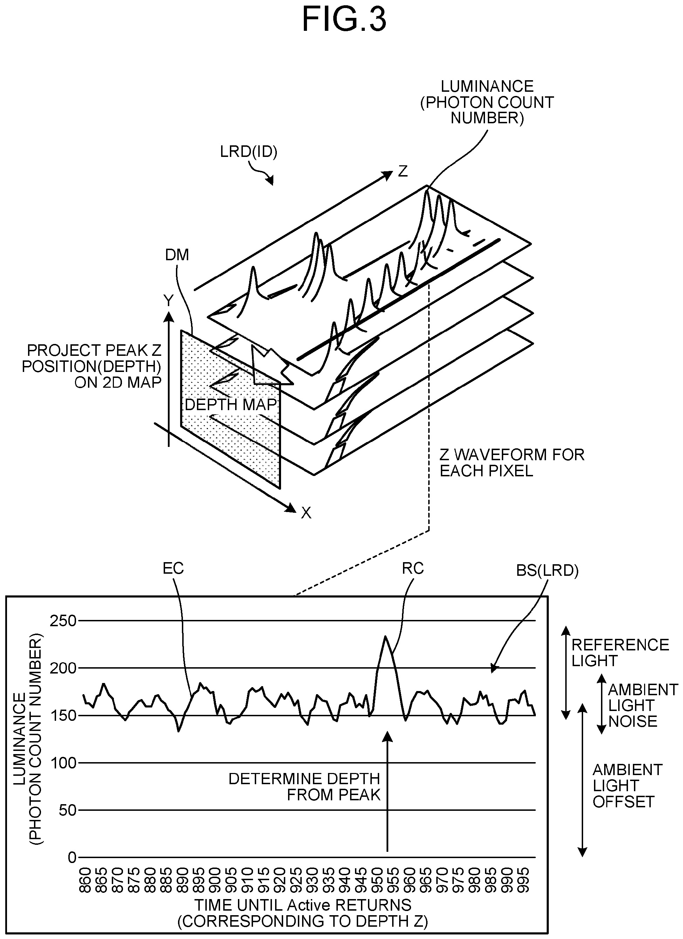

FIG. 3 is a diagram illustrating an example of light reception data LRD of the ToF camera 1.

The light reception unit 20 includes a plurality of pixels arrayed in the X direction and the Y direction. The Z direction orthogonal to the X direction and the Y direction is a depth direction. Each pixel is provided with an infrared sensor that detects infrared radiation. The infrared sensor receives infrared radiation at a preset sampling period. The infrared sensor detects the number of photons received within one sampling term (sampling period) as luminance.

The light reception unit 20 repeatedly measures the luminance within a preset measurement term (one frame). The ToF camera 1 stores the light reception data LRD for one measurement term measured by the light reception unit 20 as LiDAR input data ID. The LiDAR input data ID is time-series luminance data of each pixel measured in one measurement term. The ToF camera 1 converts the time from a measurement start time point into a distance (depth). The ToF camera 1 generates a depth map DM of the subject SU based on the LiDAR input data ID.

The lower part of FIG. 3 illustrates a luminance signal BS of one pixel. The horizontal axis indicates the time from the measurement start time point. The vertical axis represents luminance. The luminance signal BS is a signal indicating a temporal change in luminance extracted from the LiDAR input data ID. The luminance signal BS includes a reference light component RC attributed to the reference light PL and an ambient light component EC attributed to the ambient light EL. The ambient light component EC includes an offset component and a noise component.

The position of the reference light component RC in the time axis direction reflects the distance to the subject SU. An average signal value of the ambient light component EC indicates brightness of the pixel. The brightness of each pixel provides information regarding a two-dimensional image of the subject SU (two-dimensional image information). In the present disclosure, active information indicating a flight time of the reference light PL and passive information indicating two-dimensional image information of the subject SU, obtained from the ambient light EL, are extracted from the LiDAR input data ID. For example, the active information includes information indicating the position and magnitude of the peak attributed to the reference light PL of each pixel. The passive information includes information indicating an average signal value of each pixel attributed to the ambient light EL.

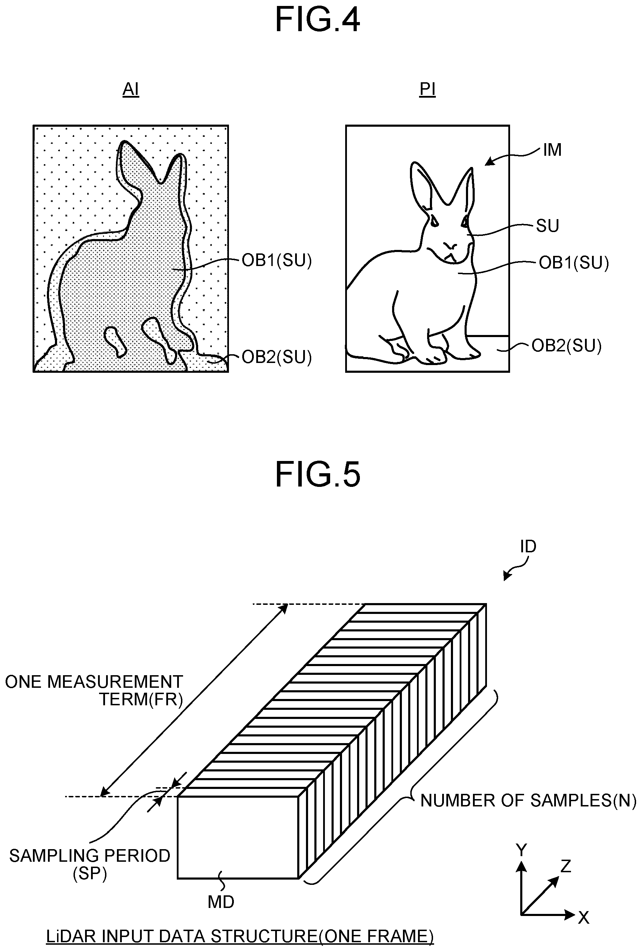

FIG. 4 is a diagram illustrating an example of active information AI and passive information PI.

The left part of FIG. 4 illustrates the active information AI extracted from the reference light component RC of each pixel. The active information AI includes information related to the position of the reference light component RC of each pixel in the time axis direction (the flight time of the reference light PL). The depth of each pixel is directly estimated by the active information AI. The right part of FIG. 4 illustrates the passive information PI extracted from the ambient light component EC of each pixel. The passive information PI includes information related to an average signal value of the ambient light component EC of each pixel. An accurate two-dimensional shape of the subject SU is detected by the passive information PI. In addition, by using a known object recognition technology, information such as the type of the subject SU can be estimated from a two-dimensional image IM of the subject SU.

For example, FIG. 4 illustrates a state in which a doll OB1 is placed on a table OB2. The depth of the boundary portion between the doll OB1 and the table OB2 cannot be accurately detected only by the active information AI. However, accurate depth can be obtained by detecting the position of the boundary between the doll OB1 and the table OB2 based on the passive information PI and correcting the depth based on the detected position of the boundary. Furthermore, in a case where it is estimated from the passive information PI that the surface of the table OB2 is a plane, the depth obtained from the active information AI can be corrected based on information such as the inclination of the plane and the length of the depth.

Furthermore, the depth can be estimated by stereo imaging using a plurality of two-dimensional images IM having different viewpoints. By fusing the depth information estimated by the stereo imaging with the depth information estimated based on the active information AI, it is possible to obtain accurate depth information. The depth detection accuracy is enhanced by combining the active distance measurement technique using the active information AI and the passive distance measurement technique using the passive information PI.

[2. LiDAR input data]

FIG. 5 is a diagram illustrating a data structure of the LiDAR input data ID.

The LiDAR input data ID includes the ToF data MD at a plurality of time points measured in the sampling period SP. The ToF data MD includes luminance data of each pixel measured at the same time point. Number of samples N of the LiDAR input data ID (the number of measurements that can be performed in one measurement term FR) is determined by the size of the memory of the ToF camera 1 and the capacity of the ToF data MD. The distance measurement range (depth measurement interval) indicating the resolution of the depth varies according to the sampling period SP. The shorter the sampling period SP, the shorter the distance measurement range, leading to higher depth resolution.

[3. Configuration of ToF camera]

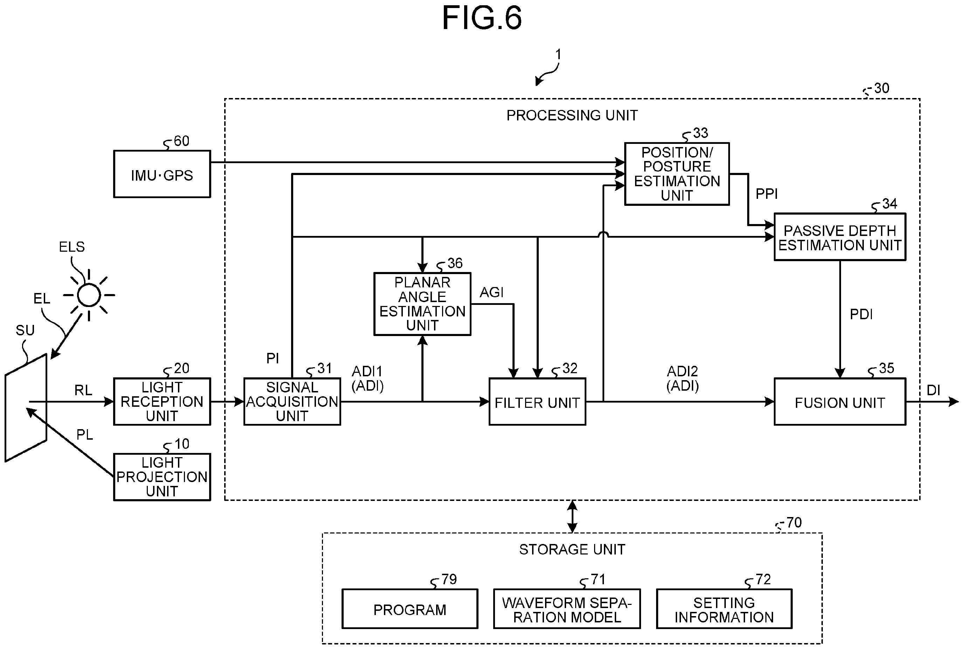

FIG. 6 is a diagram illustrating a schematic configuration of the ToF camera 1.

The ToF camera 1 includes a light projection unit 10, a light reception unit 20, a processing unit 30, a motion detection unit 60, and a storage unit 70.

Examples of the light projection unit 10 include a laser or a projector that projects the reference light PL. The light reception unit 20 is, for example, an image sensor including a plurality of pixels for infrared detection. The processing unit 30 is an information processing device that processes various types of information. The processing unit 30 generates the depth map DM based on the LiDAR input data ID acquired from the light reception unit 20. The motion detection unit 60 detects motion information of the light reception unit 20. The motion detection unit 60 includes an inertial measurement unit (IMU) and a GPS sensor, for example. The storage unit 70 stores a waveform separation model 71, setting information 72, and a program 79 necessary for information processing performed by the processing unit 30.

The processing unit 30 includes a signal acquisition unit 31, a filter unit 32, a position/posture estimation unit 33, a passive depth estimation unit 34, a fusion unit 35, and a planar angle estimation unit 36.

The signal acquisition unit 31 acquires the LiDAR input data ID from the light reception unit 20. The signal acquisition unit 31 extracts the luminance signal BS of each pixel from the LiDAR input data ID. The signal acquisition unit 31 extracts the active information AI and the passive information PI from the luminance signal BS of each pixel.

The signal acquisition unit 31 generates active depth information ADI indicating an estimation value of the depth of each pixel from the active information AI. The signal acquisition unit 31 supplies the active depth information ADI to the filter unit 32 and the planar angle estimation unit 36. The signal acquisition unit 31 supplies the passive information PI to the filter unit 32, the position/posture estimation unit 33, the passive depth estimation unit 34, and the planar angle estimation unit 36.

The filter unit 32 corrects the active depth information ADI (first active depth information ADI1) acquired from the signal acquisition unit 31 based on the passive information PI. For example, the filter unit 32 estimates the shape of the subject SU based on the two-dimensional image information of the subject SU extracted from the passive information PI. The filter unit 32 corrects the first active depth information ADI1 so that the depth of the subject SU matches the shape of the subject SU estimated based on the passive information PI. The filter unit 32 supplies the corrected active depth information ADI (second active depth information ADI2) to the position/posture estimation unit 33 and the fusion unit 35.

[4. Active depth information correction processing using passive information]

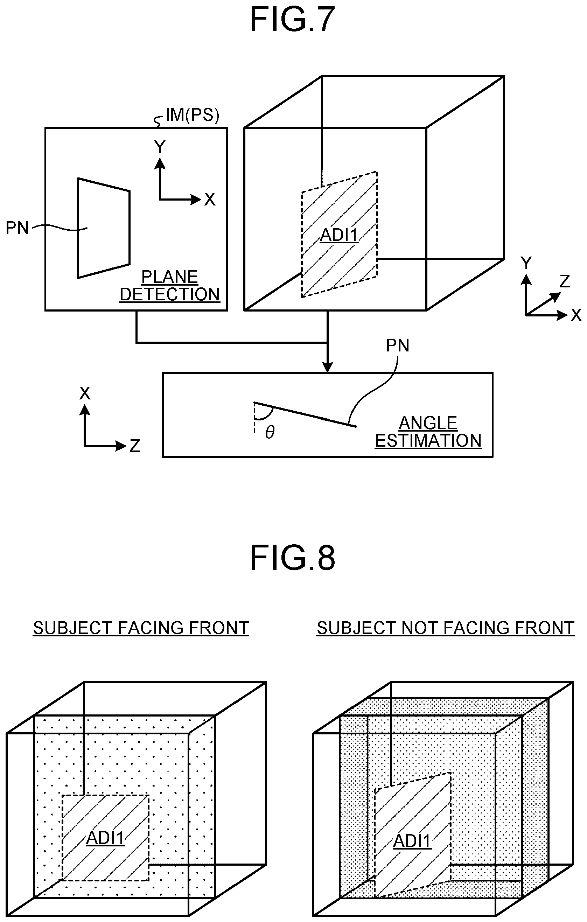

FIGS. 7 and 8 are diagrams illustrating an example of active depth information ADI correction processing performed by the filter unit 32.

For example, the filter unit 32 generates the two-dimensional image IM of the subject SU based on the passive information PI. The filter unit 32 extracts a planar portion PN of the subject SU from the two-dimensional image IM using a known object recognition technology. The planar angle estimation unit 36 estimates an angle θ of the planar portion PN of the subject SU based on the first active depth information ADI1.

As illustrated on the left part of FIG. 8, in a case where the planar portion PN is orthogonal to the depth direction (in a case where the subject SU is located facing the front of the light reception unit 20), the filter unit 32 corrects the first active depth information ADI1 so that the planar portion PN has an identical depth. As illustrated on the right part of FIG. 8, in a case where the planar portion PN is inclined with respect to the depth direction (in a case where the subject SU is located not facing the front of the light reception unit 20), the filter unit 32 corrects the first active depth information ADI1 such that the depth of the planar portion PN varies according to the angle θ.

Returning to FIG. 6, the position/posture estimation unit 33 estimates the position and posture of the light reception unit 20 during the measurement term FR. For example, the position/posture estimation unit 33 estimates the motion amount of the light reception unit 20 based on the depth information (the second active depth information ADI2 or depth information DI) at a plurality of time points acquired for each measurement term FR. The motion amount may be corrected based on the motion information acquired from the motion detection unit 60 and the two-dimensional image information (passive information PI) of the subject SU at a plurality of time points acquired for each measurement term FR. The position/posture estimation unit 33 estimates the position and posture of the light reception unit 20 based on the motion amount of the light reception unit 20. The position/posture estimation unit 33 supplies the passive depth estimation unit 34 with position/posture information PPI related to the position and posture of the light reception unit 20.

The passive depth estimation unit 34 generates passive depth information PDI based on the passive information PI. For example, the passive depth estimation unit 34 extracts, from the passive information PI, the plurality of two-dimensional images IM of the subject SU acquired from different viewpoints at different time points. The passive depth estimation unit 34 detects a plurality of viewpoints corresponding to the plurality of two-dimensional images IM based on the position/posture information PPI of the light reception unit 20 estimated by the position/posture estimation unit 33. The passive depth estimation unit 34 uses stereo imaging to generate the passive depth information PDI from the plurality of two-dimensional images IM.

The fusion unit 35 generates the depth information DI of the subject SU by fusing the passive depth information PDI with the second active depth information ADI2 generated based on the active information AI. The fusion ratio between the second active depth information ADI2 and the passive depth information PDI is set based on an energy ratio between the active signal and the passive signal, for example.

[5. Waveform separation processing]

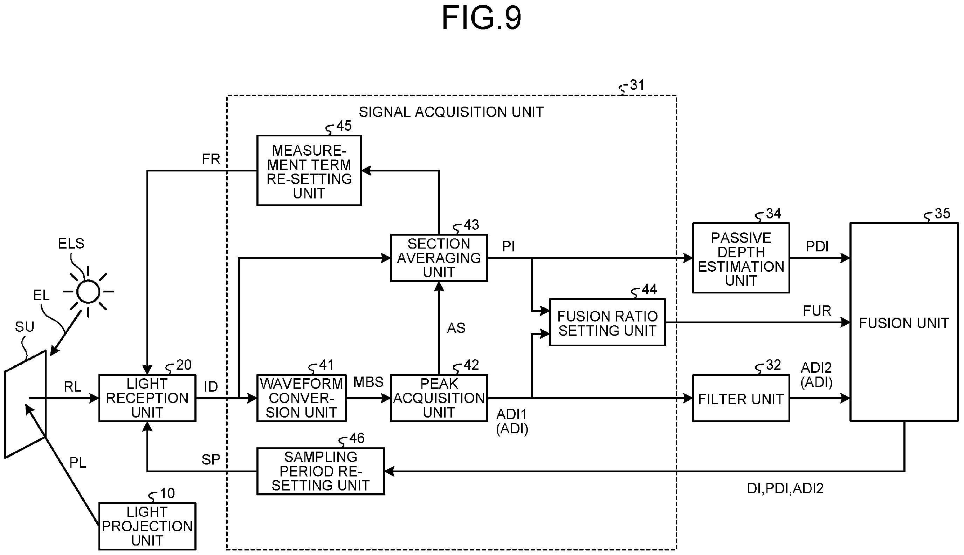

FIGS. 9 to 12 are diagrams illustrating an example of waveform separation processing performed by the signal acquisition unit 31.

As illustrated in FIG. 9, the signal acquisition unit 31 includes a waveform conversion unit 41, a peak acquisition unit 42, a section averaging unit 43, a fusion ratio setting unit 44, a measurement term re-setting unit 45, and a sampling period re-setting unit 46.

The waveform conversion unit 41 converts a peak attributed to the reference light PL into a pulsed waveform in the luminance signal BS. The waveform conversion unit 41 supplies a corrected luminance signal MBS obtained by performing the waveform conversion processing on the luminance signal BS to the peak acquisition unit 42.

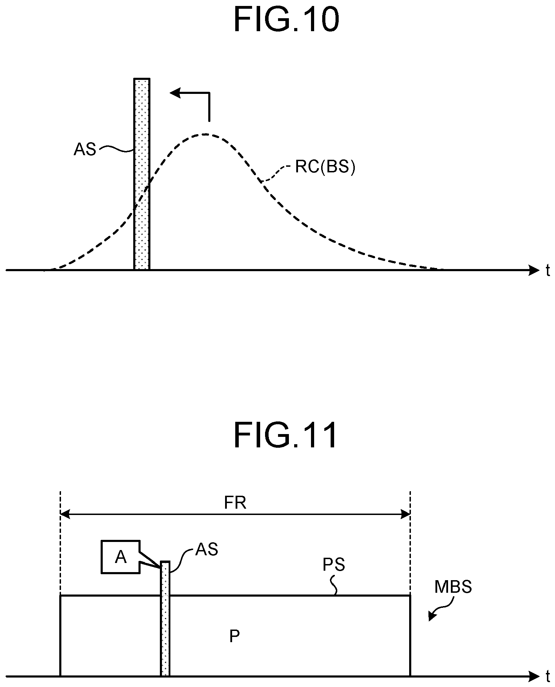

The waveform conversion processing is performed based on the waveform separation model 71. The waveform separation model 71 is, for example, a trained neural network obtained by performing machine learning on the relationship between the reference light PL and the luminance signal BS. The luminance signal BS detected for the subject SU the distance to which is known in advance is used as input data to the machine learning. As illustrated in FIG. 10, data to be used as ground truth data is a signal obtained by converting the waveform of the luminance signal BS so that the same pulsed waveform (active signal AS) as the reference light PL appears at a time point corresponding to the distance of the subject SU, instead of the reference light component RC. By inputting the luminance signal BS to the waveform separation model 71 on which such machine learning has been performed, the corrected luminance signal MBS including the active signal AS accurately reflecting the flight time is acquired.

The peak acquisition unit 42 acquires a signal of a portion corresponding to the pulsed waveform as the active signal AS attributed to the reference light PL from the luminance signal BS (corrected luminance signal MBS) having a waveform converted by the waveform conversion unit 41. The peak acquisition unit 42 calculates the depth based on the position on the time axis of the active signal AS. The peak acquisition unit 42 generates the first active depth information ADI1 based on the depth calculated for each pixel.

The section averaging unit 43 calculates an average signal value of the corrected luminance signal MBS of the portion attributed to the ambient light EL. The section averaging unit 43 acquires the calculated average signal value as a signal value of a passive signal PS attributed to the ambient light EL.

A method of calculating the signal value of the passive signal PS varies according to a ratio between the energy values of the active signal AS and the passive signal PS. Based on a preset determination criterion, the section averaging unit 43 sets various sections on the time axis in which the signal values of the corrected luminance signal MBS are averaged. For example, the determination criterion is set as a condition that the energy value of the passive signal PS is larger than the energy value of the active signal AS, with a significant difference between these energy values.

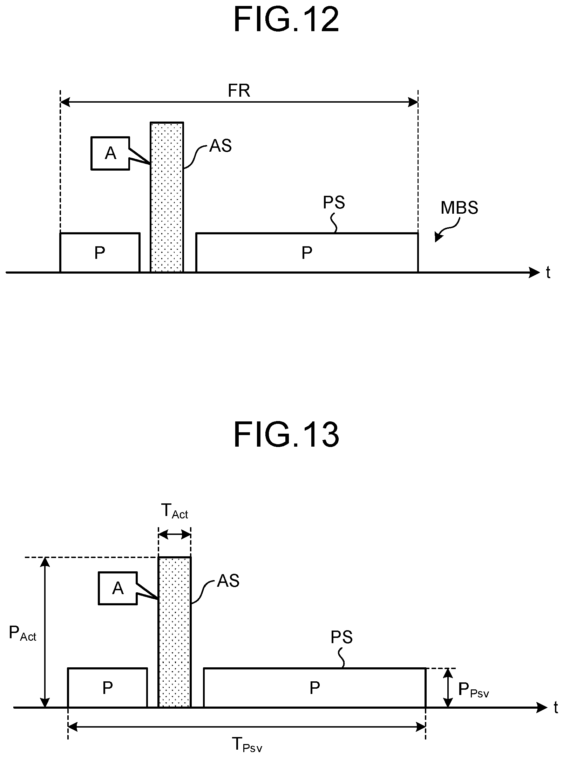

For example, as illustrated in FIG. 11, when the ratio of the energy values of the passive signal PS satisfies the determination criterion, the section averaging unit 43 calculates a signal value obtained by averaging the signal values of the corrected luminance signal MBS over an entire measurement time FR, as the signal value of the passive signal PS. As illustrated in FIG. 12, when the ratio of the energy values of the passive signal PS and the active signal AS does not satisfy the determination criterion, the section averaging unit 43 calculates, as the signal value of the passive signal PS, a signal value obtained by averaging the signal values of the corrected luminance signal MBS in the section on the time axis excluding the active signal AS.

[6. Fusion ratio setting processing]

Returning to FIG. 9, the fusion ratio setting unit 44 sets a fusion ratio FUR of the second active depth information ADI2 and the passive depth information PDI for each pixel based on the ratio between the energy value of the active signal AS and the energy value of the passive signal PS. The greater the ratio of the energy values of the active signal AS, the greater the fusion ratio FUR of the second active depth information ADI2. The shorter the distance to the subject SU, the greater the energy value of the active signal AS. Accordingly, the shorter the distance to the subject SU, the greater the contribution of the second active depth information ADI2 in the depth information DI to be generated. In a case where the subject SU is in the distance, information generated is the depth information DI having a large contribution of the passive depth information PDI.

For example, a pixel in which the fusion ratio FUR of the second active depth information ADI2 is larger than the fusion ratio FUR of the passive depth information PDI is set as an active dominant pixel in which the active signal AS is dominant. In addition, a pixel in which the fusion ratio FUR of the passive depth information PDI is larger than the fusion ratio FUR of the second active depth information ADI2 is set as a passive dominant pixel in which the passive signal PS is dominant.

The fusion unit 35 extracts an active dominant pixel group in which the active signal AS is dominant from a plurality of pixels included in the light reception unit 20. The fusion unit 35 calculates, for each pixel, a difference between the passive depth estimated from the passive information PI and the active depth estimated from the active information AI. The fusion unit 35 performs bundle adjustment of the passive depth of all the pixels of the light reception unit 20 such that the difference between the passive depth and the active depth satisfies a predetermined criterion in the active dominant pixel group.

For example, the bundle adjustment is performed so as to satisfy a criterion represented by the following Formula (1). Expression (1) represents a condition of minimizing the value obtained by adding the difference between the passive depth and the active depth for all the pixels of the active dominant pixel group.

$$\min\left(\sum_{i \in D_{Act}} \left(I_{Psv}(i) - I_{Act}(i)\right)\right) \qquad \cdots (1)$$

The fusion unit 35 sets the depth of the passive dominant pixel group in which the passive signal PS is dominant, as a passive depth after the bundle adjustment. The fusion unit 35 sets the depth of the pixel group other than the passive dominant pixel group, as an active depth.

[7. Setting of measurement term and sampling period]

The measurement term re-setting unit 45 calculates a minimum measurement term FR in which the ratio of the energy values of the passive signal PS satisfies a preset high ratio condition. The sampling period re-setting unit 46 sets the sampling period SP of the light reception unit 20 based on the maximum depth value of the subject SU, the number N of measurable samples, and the minimum measurement term FR satisfying the high ratio condition.

FIG. 13 is a diagram illustrating an example of a method of setting the measurement term FR.

In FIG. 13, a variable $T_{Psv}$ indicates a length of the measurement term SP. The active signal AS is a pulsed signal having a signal width of $T_{Act}$ and a signal value of $P_{Act}$. The passive signal PS is a rectangular signal having a signal value of $P_{Psv}$ in a section $(T_{Psv}\text{-}T_{Act})$ on the time axis excluding the active signal AS. The high ratio condition is set as a condition that satisfies the following Formula (2), for example. Formula (2) represents a condition that the energy value of the passive signal PS is 100 times or more the energy value of the active signal AS. The condition of Formula (2) can be satisfied by adjusting the width and height (signal value) of the active signal AS.

$$P_{Psv}(T_{Psv} - T_{Act}) \geq 100 P_{Act} T_{Act} \qquad \cdots (2)$$

The high ratio condition is satisfied by increasing the measurement term FR (with long $T_{Psv}$). However, due to the upper limit of the number of samples N acquirable as the LiDAR input data ID, increasing the measurement term FR prolongs the sampling period. The prolonged sampling period increases the distance measurement range, leading to a lowered depth resolution. To handle this, the measurement term re-setting unit 45 sets the length $T_{Psv}$ of the measurement term FR as the minimum length that satisfies Formula (2).

The sampling period re-setting unit 46 adaptively determines the sampling period SP for each frame in accordance with the distance to the subject SU so as to maximize the depth resolution. The sampling period re-setting unit 46 extracts the maximum value of depth (maximum depth value) from both the second active depth information ADI2 and the passive depth information PDI, and calculates the sampling period SP using the maximum depth value with higher level of reliability.

For example, in an active distance measurement technique using the reference light PL, the light reception intensity regarding the reference light PL (reflected light) varies according to the distance to the subject SU. The shorter the distance, the higher the light reception intensity and the higher the depth detection accuracy. In contrast, the longer the distance, the lower the light reception intensity and the lower the depth detection accuracy. In an active distance measurement technique, the measurable distance is shorter than in a passive measurement technique using stereo imaging. Accordingly, the sampling period re-setting unit 46 determines the priority of the second active depth information ADI2 and the passive depth information PDI based on the distance to the subject SU. The sampling period re-setting unit 46 sets the sampling period SP using the maximum depth value extracted from the information determined to have higher priority.

For example, the sampling period re-setting unit 46 extracts the maximum depth (maximum depth value) among the depths of the subject SU from both the second active depth information ADI2 and the passive depth information PDI. The sampling period re-setting unit 46 determines the priority of the passive depth information PDI based on a maximum depth value (first maximum depth value) extracted from the second active depth information ADI2 and a maximum depth value (second maximum depth value) extracted from the passive depth information PDI.

When having determined to prioritize the passive depth information PDI, the sampling period re-setting unit 46 sets the sampling period SP using the second maximum depth value. When having determined not to prioritize the passive depth information PDI, the sampling period re-setting unit 46 sets the sampling period SP using a maximum depth value (third maximum depth value) extracted from the depth information DI.

For example, the following is an assumed case where the magnitude of the first maximum depth value is $\max(depth_{Active})$, the magnitude of the second maximum depth value is $\max(depth_{passive})$, the length of the sampling period SP is $\Delta T$, the number of measurable samples is N, the speed of light is c, and the number of buffer samples is buffer. As indicated in the following Formula (3), in a case where the second maximum depth value is sufficiently larger than the first maximum depth value and it is determined that the depth cannot be accurately measured by the active measurement technique, the sampling period re-setting unit 46 sets the sampling period SP using measurement information (second maximum depth value) of the passive measurement technique capable of accurately measuring the distant positions.

$$\max\left(depth_{passive}\right) \gg \max(depth_{Active}) \Rightarrow \Delta T = \frac{2 \times \max(depth_{Passive})}{c \times (N - buffer)} \quad \cdots (3)$$

As indicated in the following Formula (4), in a case where the second maximum depth value and the first maximum depth value are equal, and it is determined that the depth can be measured with high accuracy by the active measurement technique, the sampling period re-setting unit 46 sets the sampling period SP using measurement information (third maximum depth value = max(depth$_{Fusion}$)) with high certainty obtained by fusion.

$$\max\left(depth_{passive}\right) \approx \max(depth_{Active}) \Rightarrow \Delta T = \frac{2 \times \max(depth_{Fusion})}{c \times (N - buffer)} \quad \cdots (4)$$

However, as indicated in the following formula (5), when the sampling period SP becomes short, the measurement term FR, which is calculated by the sampling period SP and the number of samples N, becomes shorter than the minimum measurement term FR calculated by the formula (2) in some cases. In this case, sampling period re-setting unit 46 sets the sampling period SP based on the minimum measurement term SP calculated by Formula (2).

$$\min(T_{Psv}) > \Delta T \times N \Rightarrow \Delta T = \min(T_{Psv})/N \quad \cdots (5)$$

The measurement term re-setting unit 45 and the sampling period re-setting unit 46 control the measurement term FR and the sampling period SP of the light reception unit 20 based on the calculation result. The light reception unit 20 performs subsequent time (subsequent frame) measurement based on the set measurement term FR and sampling period SP.

The information regarding the above-described various conditions and criteria is included in the setting information 72. The waveform separation model 71, the setting information 72, and the program 79 used for the above-described processing are stored in the storage unit 70. The program 79 is a program that causes a computer to execute information processing according to the present embodiment. The processing unit 30 performs various processes in accordance with the program 79 stored in the storage unit 70. The storage unit 70 may be used as a work area for temporarily storing a processing result of the processing unit 30. The storage unit 70 includes, for example, any non-transitory storage medium such as a semiconductor storage medium and a magnetic storage medium. The storage unit 70 includes an optical disk, a magnetooptical disk, or flash memory, for example. The program 79 is stored in a non-transitory computer-readable storage medium, for example.

The processing unit 30 is a computer including a processor and memory, for example. The memory of the processing unit 30 includes random access memory (RAM) and read only memory (ROM). By executing the program 79, the processing unit 30 functions as the signal acquisition unit 31, the filter unit 32, the position/posture estimation unit 33, the passive depth estimation unit 34, the fusion unit 35, the planar angle estimation unit 36, the waveform conversion unit 41, the peak acquisition unit 42, the section averaging unit 43, the fusion ratio setting unit 44, the measurement term re-setting unit 45, and the sampling period re-setting unit 46.

[8. Information processing method]

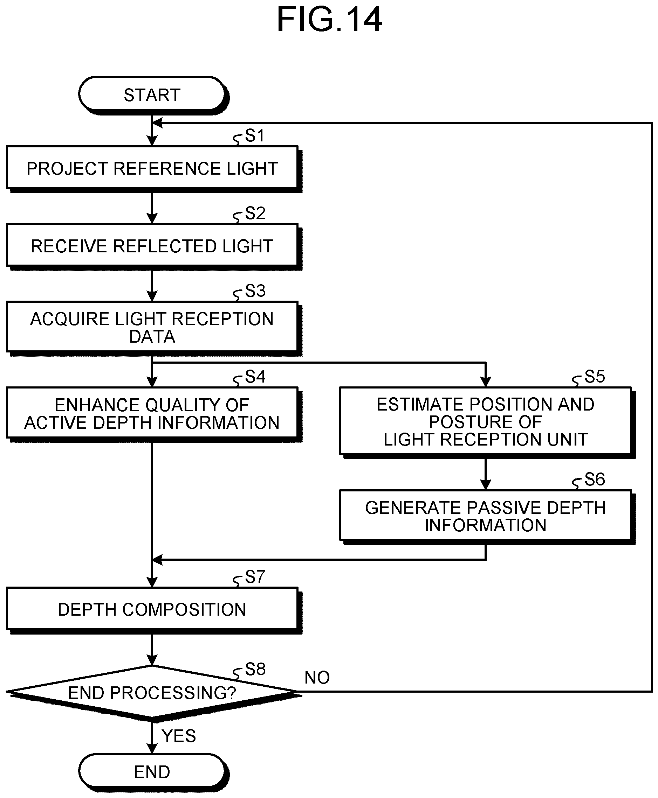

FIG. 14 is a flowchart illustrating an example of information processing related to estimation of depth.

In step S1, the light projection unit 10 projects the reference light PL toward the subject SU. In step S2, the light reception unit 20 receives the reflected light RL. In step S3, the processing unit 30 acquires the LiDAR input data ID as the light reception data LRD from the light reception unit 20.

In step S4, the processing unit 30 performs processing for enhancing the quality of the active depth information ADI. For example, the processing unit 30 extracts, from the LiDAR input data ID, the active information AI indicating the flight time of the reference light PL and the passive information PI indicating the two-dimensional image information of the subject SU obtained from the ambient light EL. The processing unit 30 corrects the active depth information ADI so that the depth of the subject SU matches the shape of the subject SU estimated based on the passive information PI.

In parallel with step S4, the processing unit 30 estimates the depth of the subject SU from the passive information PI using a passive distance measurement technique. For example, in step S5, the processing unit 30 estimates the position and posture of the light reception unit 20 based on the two-dimensional image information of the subject SU extracted from the passive information PI, the active depth information ADI, and the motion information acquired from the motion detection unit 60.

In step S6, the processing unit 30 extracts, from the passive information PI, the plurality of two-dimensional images IM of the subject SU acquired from different viewpoints at different time points. The processing unit 30 detects the viewpoint of the light reception unit 20 from which the two-dimensional image IM has been acquired for each two-dimensional image IM based on the information of the position and posture of the light reception unit 20. The processing unit 30 use stereo imaging to generate passive depth information PDI from a plurality of two-dimensional images IM having different viewpoints.

In step S7, the processing unit 30 fuses the passive depth information PDI with the active depth information ADI. This leads to composition of the active depth information ADI and the passive depth information PDI.

In step S8, the processing unit 30 determines whether to end the processing. For example, the processing unit 30 determines to end the processing when having received an operation on an image capture end button or the like from the user operating the ToF camera 1. In a case where it is determined in step S8 to end the processing (step S8: Yes), the depth estimation processing is ended. In a case where it is determined in step S8 not to end the processing (step S8: No), the processing returns to step S1, and the above-described steps are repeated until determined to end the processing.

[9. Effects]

The processing unit 30 includes the signal acquisition unit 31, the passive depth estimation unit 34, and the fusion unit 35. The signal acquisition unit 31 extracts, from the light reception data LDR, active information AI indicating the flight time of the reference light PL and passive information PI indicating the two-dimensional image information of the subject SU obtained from the ambient light EL. The passive depth estimation unit 34 generates the passive depth information PDI based on the passive information PI. The fusion unit 35 generates the depth information DI of the subject SU by fusing the passive depth information PDI with the active depth information ADI generated based on the active information AI. The information processing method of the present embodiment including execution of processing of the processing unit 30 described above by a computer. The program 79 of the present embodiment causes the computer to implement the processing of the processing unit 30 described above.

With this configuration, the depth detection accuracy is enhanced using the ambient light EL. Therefore, high accuracy detection of the depth is performed even in an environment with strong ambient light such as outdoors.

The passive depth estimation unit 34 extracts, from the passive information PI, the plurality of two-dimensional images IM of the subject SU acquired from different viewpoints at different time points. The passive depth estimation unit 34 uses stereo imaging to generate the passive depth information PDI from the plurality of two-dimensional images IM.

With this configuration, the passive depth information PDI is generated without preparing the light reception unit 20 different for each viewpoint.

The passive depth estimation unit 34 detects a plurality of viewpoints corresponding to the plurality of two-dimensional images IM based on the position/posture information PPI estimated using the active depth information ADI.

With this configuration, the passive depth information PDI with high depth estimation accuracy can be obtained.

The processing unit 30 includes the filter unit 32. The filter unit 32 corrects the active depth information ADI so that the depth of the subject SU matches the shape of the subject SU estimated based on the passive information PI.

With this configuration, active depth information with high depth estimation accuracy can be obtained.

The processing unit 30 includes the planar angle estimation unit 36. The planar angle estimation unit 36 estimates the angle $\theta$ of the planar portion PN of the subject SU based on the active depth information ADI (first active depth information ADI1) before correction. In a case where the planar portion PN is orthogonal to the depth direction, the filter unit 32 corrects the active depth information ADI such that the planar portion PN has an identical depth. In a case where the planar portion PN is inclined with respect to the depth direction, the filter unit 32 corrects the active depth information ADI such that the depth of the planar portion PN varies according to the angle $\theta$.

With this configuration, the depth of the planar portion PN is accurately estimated based on the angle $\theta$ of the planar portion PN.

The signal acquisition unit 31 includes the waveform conversion unit 41, the peak acquisition unit 42, and the section averaging unit 43. The waveform conversion unit 41 converts a peak attributed to the reference light PL into a pulsed waveform. The peak acquisition unit 42 acquires a signal of a portion corresponding to the pulsed waveform as the active signal AS attributed to the reference light PL. The section averaging unit 43 calculates an average signal value of a portion attributed to the ambient light EL. The section averaging unit 43 acquires the calculated average signal value as a signal value of the passive signal PS attributed to the ambient light EL.

This configuration makes it possible to separate the active signal AS and the passive signal PS from each other with high accuracy.

The signal acquisition unit 31 includes the fusion ratio setting unit 44. The fusion ratio setting unit 44 sets the fusion ratio FUR of the active depth information ADI and the passive depth information PDI based on the ratio between the energy value of the active signal AS and the energy value of the passive signal PS.

With this configuration, the appropriate fusion ratio FUR according to the reliability of the active depth information ADI is set.

The fusion unit 35 extracts an active dominant pixel group in which the active signal AS is dominant. The fusion unit 35 performs bundle adjustment of the passive depth of all the pixels such that a difference between the passive depth estimated from the passive information PI and the active depth estimated from the active information AI satisfies a predetermined criterion in the active dominant pixel group. The fusion unit 35 sets the depth of the passive dominant pixel group in which the passive signal PS is dominant as the passive depth after the bundle adjustment, and sets the depth of the pixel group other than the passive dominant pixel group as the active depth.

This configuration makes it possible to enhance the passive depth estimation accuracy.

The signal acquisition unit 31 includes the measurement term re-setting unit 45. The measurement term re-setting unit 45 calculates the minimum measurement term FR in which the ratio of the energy values of the passive signal PS satisfies a preset high ratio condition.

This configuration makes it possible to stably acquire the light reception data LDR satisfying the high ratio condition.

The signal acquisition unit 31 includes the sampling period re-setting unit 46. The sampling period re-setting unit 46 sets the sampling period SP based on the maximum depth value of the subject SU, the number N of measurable samples, and the minimum measurement term FR satisfying the high ratio condition.

This configuration makes it possible to perform measurement with high depth resolution.

The sampling period re-setting unit 46 determines the priority of the active depth information ADI and the passive depth information PDI based on the distance to the subject SU. The sampling period re-setting unit 46 sets the sampling period SP using the maximum depth value extracted from the information determined to have higher priority.

With this configuration, the maximum depth value, which is the basis of the calculation of the sampling period SP, is appropriately determined based on the reliability of the measurement information according to the distance to the subject SU.

The sampling period re-setting unit 46 determines the priority of the passive depth information PDI based on the first maximum depth value extracted from the active depth information ADI and the second maximum depth value extracted from the passive depth information PDI. When having determined to prioritize the passive depth information PDI, the sampling period re-setting unit 46 sets the sampling period SP using the second maximum depth value. When having determined not to prioritize the passive depth information PDI, the sampling period re-setting unit 46 sets the sampling period SP using the third maximum depth value extracted from the depth information DI.

With this configuration, an appropriate sampling period is calculated based on the maximum depth value with high accuracy.

The effects described in the present specification are merely examples, and thus, there may be other effects, not limited to the exemplified effects.

[Supplementary notes]

Note that the present technique can also have the following configurations.

(1) An information processing device comprising:

a signal acquisition unit that extracts, from light reception data, active information indicating a flight time of reference light and passive information indicating two-dimensional image information of a subject obtained from ambient light;
a passive depth estimation unit that generates passive depth information based on the passive information; and
a fusion unit that fuses the passive depth information with active depth information generated based on the active information to generate depth information of the subject.

(2) The information processing device according to (1),
wherein the passive depth estimation unit extracts, from the passive information, a plurality of two-dimensional images of the subject acquired from different viewpoints at different time points, and generates the passive depth information from the plurality of two-dimensional images by stereo imaging.

(3) The information processing device according to (2),
wherein the passive depth estimation unit detects a plurality of viewpoints corresponding to the plurality of two-dimensional images based on position/posture information estimated using the active depth information.

(4) The information processing device according to any one of (1) to (3), further comprising

a filter unit that corrects the active depth information such that a depth of the subject matches a shape of the subject estimated based on the passive information.

(5) The information processing device according to (4), further comprising

a planar angle estimation unit that estimates an angle of a planar portion of the subject based on the active depth information before correction,

wherein the filter unit corrects the active depth information such that the planar portion has an identical depth in a case where the planar portion is orthogonal to a depth direction, and corrects the active depth information such that the depth of the planar portion varies according to the angle in a case where the planar portion is inclined with respect to the depth direction.

(6) The information processing device according to any one of (1) to (5),

wherein the signal acquisition unit includes: a waveform conversion unit that converts a peak attributed to the reference light into a pulsed waveform; a peak acquisition unit that acquires a signal of a portion corresponding to the pulsed waveform as an active signal attributed to the reference light; and a section averaging unit that calculates an average signal value of a portion attributed to the ambient light and acquires the calculated average signal value as a signal value of a passive signal attributed to the ambient light.

(7) The information processing device according to (6),

wherein the signal acquisition unit includes a fusion ratio setting unit that sets a fusion ratio between the active depth information and the passive depth information based on a ratio between an energy value of the active signal and an energy value of the passive signal.

(8) The information processing device according to (6) or (7),

wherein the fusion unit

extracts an active dominant pixel group in which the active signal is dominant,

applies bundle adjustment on passive depths of all pixels such that a difference between a passive depth estimated from the passive information and an active depth estimated from the active information satisfies a predetermined criterion in the active dominant pixel group, and

sets a depth of a passive dominant pixel group in which the passive signal is dominant, as the passive depth after bundle adjustment, and sets a depth of a pixel group other than the passive dominant pixel group, as the active depth.

(9) The information processing device according to any one of (6) to (8),

wherein the signal acquisition unit includes a measurement term re-setting unit that calculates a minimum measurement term in which a ratio of an energy value of the passive signal satisfies a preset high ratio condition.

(10) The information processing device according to (9),

wherein the signal acquisition unit includes a sampling period re-setting unit that sets a sampling period based on a maximum depth value of the subject, number of measurable samples, and the minimum measurement term.

(11) The information processing device according to (10),

wherein the sampling period re-setting unit determines priority of the active depth information and the passive depth information based on a distance to the subject, and sets the sampling period using the maximum depth value extracted from the information determined to have a higher priority.

(12) The information processing device according to (11),

wherein the sampling period re-setting unit determines the priority based on a first maximum depth value extracted from the active depth information and a second maximum depth value extracted from the passive depth information, sets the sampling period using the second maximum depth value when having determined that the passive depth information is to be prioritized, and sets the sampling period using a third maximum depth value extracted from the depth information when having determined that the passive depth information is not to be prioritized.

(13) An information processing method to be executed by a computer, the method comprising:

extracting, from light reception data, active information indicating a flight time of reference light and passive information indicating two-dimensional image information of a subject obtained from ambient light;

generating passive depth information based on the passive information; and

fusing the passive depth information with active depth information generated based on the active information to generate depth information of the subject.

(14) A program for causing a computer to execute:

extracting, from light reception data, active information indicating a flight time of reference light and passive information indicating two-dimensional image information of a subject obtained from ambient light;

generating passive depth information based on the passive information; and

fusing the passive depth information with active depth information generated based on the active information to generate depth information of the subject.

Reference Signs List

| | |
|---|---|
| 30 | PROCESSING UNIT (INFORMATION PROCESSING DEVICE) 31 SIGNAL ACQUISITION UNIT |
| 32 | FILTER UNIT |
| 34 | PASSIVE DEPTH ESTIMATION UNIT |
| 35 | FUSION UNIT |
| 36 | PLANAR ANGLE ESTIMATION UNIT |
| 41 | WAVEFORM CONVERSION UNIT |
| 42 | PEAK ACQUISITION UNIT |
| 43 | SECTION AVERAGING UNIT |
| 44 | FUSION RATIO SETTING UNIT |
| 45 | MEASUREMENT TERM RE-SETTING UNIT |
| 46 | SAMPLING PERIOD RE-SETTING UNIT |
| 79 | PROGRAM |
| ADI | ACTIVE DEPTH INFORMATION |
| AI | ACTIVE INFORMATION |
| AS | ACTIVE SIGNAL |
| EL | AMBIENT LIGHT |
| FR | MEASUREMENT TERM |
| IM | TWO-DIMENSIONAL IMAGE |
| LDR | LIGHT RECEPTION DATA |
| PDI | PASSIVE DEPTH INFORMATION |
| PI | PASSIVE INFORMATION |
| PL | REFERENCE LIGHT |
| PN | PLANAR PORTION |
| PPI | POSITION/POSTURE INFORMATION |
| PS | PASSIVE SIGNAL |
| SP | SAMPLING PERIOD |
| SU | SUBJECT |
| DI | DEPTH INFORMATION |
| $\theta$ | ANGLE |

**Claims**

1. An information processing device comprising:

   a signal acquisition unit that extracts, from light reception data, active information indicating a flight time of reference light and passive information indicating two-dimensional image information of a subject obtained from ambient light;
   a passive depth estimation unit that generates passive depth information based on the passive information; and
   a fusion unit that fuses the passive depth information with active depth information generated based on the active information to generate depth information of the subject.

2. The information processing device according to claim 1,
   wherein the passive depth estimation unit extracts, from the passive information, a plurality of two-dimensional images of the subject acquired from different viewpoints at different time points, and generates the passive depth information from the plurality of two-dimensional images by stereo imaging.

3. The information processing device according to claim 2,
wherein the passive depth estimation unit detects a plurality of viewpoints corresponding to the plurality of two-dimensional images based on position/posture information estimated using the active depth information.

4. The information processing device according to claim 1, further comprising
a filter unit that corrects the active depth information such that a depth of the subject matches a shape of the subject estimated based on the passive information.

5. The information processing device according to claim 4, further comprising

a planar angle estimation unit that estimates an angle of a planar portion of the subject based on the active depth information before correction,
wherein the filter unit corrects the active depth information such that the planar portion has an identical depth in a case where the planar portion is orthogonal to a depth direction, and corrects the active depth information such that the depth of the planar portion varies according to the angle in a case where the planar portion is inclined with respect to the depth direction.

6. The information processing device according to claim 1,
wherein the signal acquisition unit includes: a waveform conversion unit that converts a peak attributed to the reference light into a pulsed waveform; a peak acquisition unit that acquires a signal of a portion corresponding to the pulsed waveform as an active signal attributed to the reference light; and a section averaging unit that calculates an average signal value of a portion attributed to the ambient light and acquires the calculated average signal value as a signal value of a passive signal attributed to the ambient light.

7. The information processing device according to claim 6,
wherein the signal acquisition unit includes a fusion ratio setting unit that sets a fusion ratio between the active depth information and the passive depth information based on a ratio between an energy value of the active signal and an energy value of the passive signal.

8. The information processing device according to claim 6,

wherein the fusion unit
extracts an active dominant pixel group in which the active signal is dominant,
applies bundle adjustment on passive depths of all pixels such that a difference between a passive depth estimated from the passive information and an active depth estimated from the active information satisfies a predetermined criterion in the active dominant pixel group, and
sets a depth of a passive dominant pixel group in which the passive signal is dominant, as the passive depth after bundle adjustment, and sets a depth of a pixel group other than the passive dominant pixel group, as the active depth.

9. The information processing device according to claim 6,
wherein the signal acquisition unit includes a measurement term re-setting unit that calculates a minimum measurement term in which a ratio of an energy value of the passive signal satisfies a preset high ratio condition.

10. The information processing device according to claim 9,
wherein the signal acquisition unit includes a sampling period re-setting unit that sets a sampling period based on a maximum depth value of the subject, number of measurable samples, and the minimum measurement term.

11. The information processing device according to claim 10,
wherein the sampling period re-setting unit determines priority of the active depth information and the passive depth information based on a distance to the subject, and sets the sampling period using the maximum depth value extracted from the information determined to have a higher priority.

12. The information processing device according to claim 11,
wherein the sampling period re-setting unit determines the priority based on a first maximum depth value extracted from the active depth information and a second maximum depth value extracted from the passive depth information, sets the sampling period using the second maximum depth value when having determined that the passive depth information is to be prioritized, and sets the sampling period using a third maximum depth value extracted from the depth information when having determined that the passive depth information is not to be prioritized.

13. An information processing method to be executed by a computer, the method comprising:

extracting, from light reception data, active information indicating a flight time of reference light and passive information indicating two-dimensional image information of a subject obtained from ambient light;
generating passive depth information based on the passive information; and
fusing the passive depth information with active depth information generated based on the active information to generate depth information of the subject.

14. A program for causing a computer to execute:

extracting, from light reception data, active information indicating a flight time of reference light and passive information indicating two-dimensional image information of a subject obtained from ambient light;
generating passive depth information based on the passive information; and
fusing the passive depth information with active depth information generated based on the active information to generate depth information of the subject.

# FIG.1

Laser pulse — PL

10

20

1

RL

Refrection

t

d=t·c/2(c:speed of light)

SU

# FIG.2

ELS

EL                    EL

1

AMBIENT LIGHT(OFFSET+NOISE):EL

REFERENCE LIGHT:PL

SU

# FIG.3

LUMINANCE (PHOTON COUNT NUMBER)

LRD(ID)

Z

DM

Y

PROJECT PEAK Z POSITION(DEPTH) ON 2D MAP

DEPTH MAP

X

Z WAVEFORM FOR EACH PIXEL

EC          RC          BS(LRD)

REFERENCE LIGHT

AMBIENT LIGHT NOISE

AMBIENT LIGHT OFFSET

DETERMINE DEPTH FROM PEAK

TIME UNTIL Active RETURNS (CORRESPONDING TO DEPTH Z)

# FIG.4

AI

PI

OB1(SU)

OB2(SU)

IM

SU

OB1(SU)

OB2(SU)

# FIG.5

ID

ONE MEASUREMENT
TERM(FR)

NUMBER OF SAMPLES(N)

SAMPLING PERIOD
(SP)

MD

Y

Z

X

LiDAR INPUT DATA STRUCTURE(ONE FRAME)

# FIG.6

EP 4 293 390 A1

# FIG.7

IM(PS)

Y

X

PN

PLANE
DETECTION

ADI1

Y

Z

X

PN

X

Z

θ

ANGLE
ESTIMATION

# FIG.8

SUBJECT FACING FRONT

SUBJECT NOT FACING FRONT

ADI1

ADI1

# FIG.9

EP 4 293 390 A1

# FIG.10

AS

RC(BS)

t

# FIG.11

FR

A

AS

PS

MBS

P

t

# FIG.12

FR

A

AS

PS

P

P

MBS

t

# FIG.13

$T_{Act}$

A

AS

PS

$P_{Act}$

P

P

$P_{Psv}$

t

$T_{Psv}$

# FIG.14

START

PROJECT REFERENCE LIGHT — S1

RECEIVE REFLECTED LIGHT — S2

ACQUIRE LIGHT RECEPTION DATA — S3

ENHANCE QUALITY OF ACTIVE DEPTH INFORMATION — S4

ESTIMATE POSITION AND POSTURE OF LIGHT RECEPTION UNIT — S5

GENERATE PASSIVE DEPTH INFORMATION — S6

DEPTH COMPOSITION — S7

END PROCESSING? — S8    NO

YES

END

## INTERNATIONAL SEARCH REPORT

| International application No. |
|---|
| **PCT/JP2022/002517** |

### A. CLASSIFICATION OF SUBJECT MATTER

*G01S 17/86*(2020.01)i; *G01B 11/24*(2006.01)i; *G01C 3/06*(2006.01)i; *G01S 17/894*(2020.01)i
FI:    G01S17/86; G01S17/894; G01B11/24 A; G01C3/06 130

According to International Patent Classification (IPC) or to both national classification and IPC

### B. FIELDS SEARCHED

Minimum documentation searched (classification system followed by classification symbols)

G01T/48-7/51; G01S17/00-17/95; G01B11/00-11/30; G01C3/06-3/08; H04N13/221

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-116309 A (FUJIFILM CORP.) 22 May 2008 (2008-05-22) | 1, 4-5, 13-14 |
| | paragraphs [0079]-[0119], fig. 1-8 | |
| Y | | 2 |
| A | | 3, 6-12 |
| Y | JP 2002-077941 A (MITSUBISHI ELECTRIC CORP.) 15 March 2002 (2002-03-15) | 2 |
| | paragraphs [0035]-[0050], fig. 1-9 | |
| A | | 3, 6-12 |
| A | JP 2001-245323 A (MINOLTA CO., LTD.) 07 September 2001 (2001-09-07) | 1-14 |
| | abstract | |
| A | US 2016/0260250 A1 (JOVANOVIC, Dejan et al.) 08 September 2016 (2016-09-08) | 1-14 |
| | entire text, all drawings | |
| P, X | JP 2021-148746 A (RICOH CO., LTD.) 27 September 2021 (2021-09-27) | 1, 4-5, 13-14 |
| | paragraphs [0009]-[0061], fig. 1-11 | |
| P, A | | 2-3, 6-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/002517**

| Patent document cited in search report | | | Publication date (day/month/year) | Patent family member(s) | Publication date (day/month/year) |
|---|---|---|---|---|---|
| JP | 2008-116309 | A | 22 May 2008 | (Family: none) | |
| JP | 2002-077941 | A | 15 March 2002 | (Family: none) | |
| JP | 2001-245323 | A | 07 September 2001 | (Family: none) | |
| US | 2016/0260250 | A1 | 08 September 2016 | (Family: none) | |
| JP | 2021-148746 | A | 27 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010071976 A
- WO 2010021090 A
- JP 2011233983 A
- JP 2001264033 A